Europäisches Patentamt

European Patent Office

Office européen des brevets

(11) Publication number: **0 278 714**
A2

## (12) EUROPEAN PATENT APPLICATION

(21) Application number: 88301030.8

(22) Date of filing: 08.02.88

(51) Int. Cl.4: **G01B 11/00** , G03H 1/00

(30) Priority: **12.02.87 GB 8703228**

(43) Date of publication of application:
**17.08.88 Bulletin 88/33**

(84) Designated Contracting States:
**CH DE ES FR GB IT LI NL SE**

(71) Applicant: HOLTRONIC TECHNOLOGIES
LIMITED
Rolls House 7 Rolls Buildings Fetter Lane
London EC4A 1NH(GB)

(72) Inventor: Phillips, Nicholas John
85 Byron Street
Loughborough Leicestershire(GB)

(74) Representative: Ellis, Edward Lovell et al
MEWBURN ELLIS & CO. 2/3 Cursitor Street
London EC4A 1BQ(GB)

(54) Improvements in apparatus for the positional detection of objects.

(57) Apparatus for the positional detection of objects in which a holographic image of the sample object is recorded on a photographic plate, which includes a laser source (40), a double convex lens (42) a collimating mirror (44), a holographic recording plate (46) and an object support (48). The lens (42) directs both the reference and signals onto the collimating mirror (44) and the object support (48) respectively. The signal beam by interference with the reference beam produces a three dimensional holographic image of the object on the recording plate (46).

EP 0 278 714 A2

*FIG. 2*

## "IMPROVEMENTS IN APPARATUS FOR THE POSITIONAL DETECTION OF OBJECTS"

The present invention relates to improvements in apparatus for the positional detection of objects.

In particular it is directed to a holographic technique for the detection of position of known items (or objects) and the rejection of those samples that do not lie within certain defined spatial parameters.

An apparatus for the positional detection of objects is disclosed in copending British Patent Application No. 87.17741 (Serial No. 2,194,353), the objects in question being three equi-spaced wires.

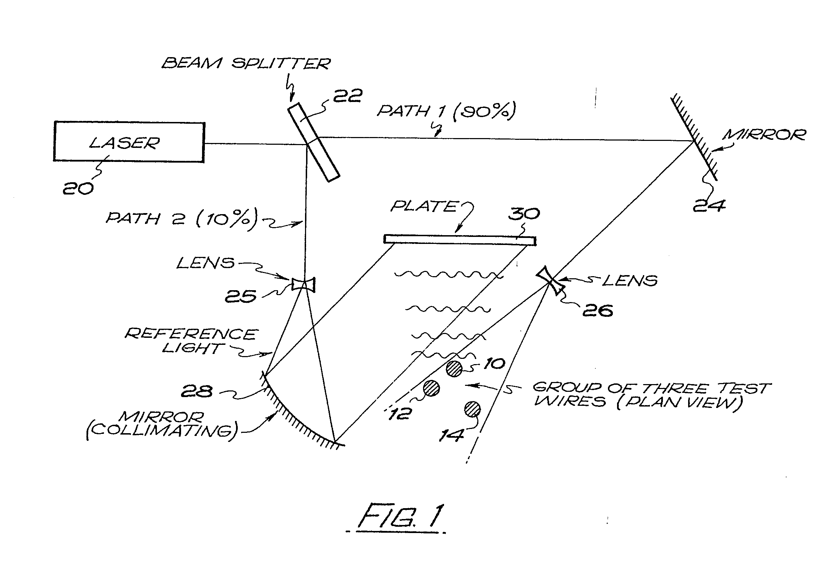

Referring to Figure 1 of the accompanying drawings, which is equivalent to Figure 6 of British Patent Application No. 87.17741 (Serial No. 2,194,353), a holographic recording of these three wires was made using apparatus which includes a laser 20, a beam splitter 22, a mirror 24, a pair of lenses 25 and 26, a collimating mirror 28 and a holographic recording plate 30.

The laser 20 is a Krypton laser which generates a coherent radiation at a wavelength of 647 nm. The beam splitter 22 divides the coherent radiation into two paths. The first path which comprises 90% of the radiation passes through the beam splitter 22 and is reflected by the mirror 24 towards the concave lens 26. The lens 26 causes the rays to diverge and illuminate the object which comprises the groups of three wires 10, 12 and 14. The second path which comprises 10% of the radiation forms the reference beams and after passing through the concave lens 25, the diverging rays are reflected towards the plate 30 as parallel rays, by means of the concave collinating mirror 28. Due to the interference between light emitted from the illuminated object and the reference beam, a holographic image of the object (the three wires 10, 12 and 14) is formed in the recording emulsion of the plate 30.

It will be noted from Figure 1, that the signal path between the beam splitter 22 and the group of three wires 10, 12 and 14 includes the lens 24 and the mirror 26, whilst the reference path between the beam splitter 22 and the plate 30 includes the lens 25 and the mirror 28. In order that accurate results can be obtained, it is essential that none of these members be subjected to any vibration which may cause blurring of the images and hence inaccurate positional detection of the objects.

It is therefore an object of the present invention to reduce the likelihood of unwanted vibrations causing any problems in the positional detection of the objects.

According to the present invention there is provided apparatus for the positional detection of objects in which a holographic image of the sample object is recorded on a photographic plate, wherein the reference and signal beams are not split, and reflecting means for the reference beam and a holder to locate the object are positioned such that the relationship:
$|L_1-L_2|<L_c$ hereinafter defined is satisfied.

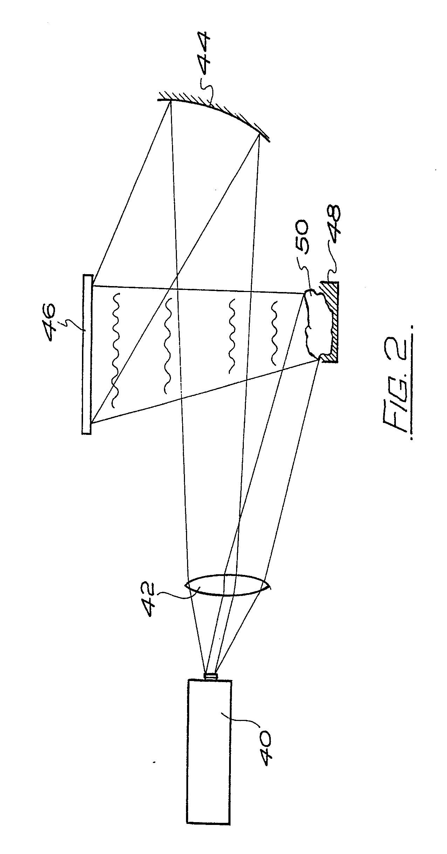

The present invention will now be described in greater detail with reference to Figure 2 of the accompanying drawings, which is a diagrammatic view of one preferred form of apparatus for making a holographic image of an object for the position detection of like objects.

The principle of the invention is based on the relationship:
$$|L_1-L_2|<L_c$$
where $L_1$ and $L_2$ are respectively the lengths of reference and signal paths and $L_c$ is the path difference over which interference can still take place. Thus provided it is possible to arrange the apparatus to satisfy the above relationship, it is thus possible to eliminate the sue of separate paths provided with the aid of a beam splitter as shown in Figure 1.

Referring now to Figure 2, the apparatus comprises a laser 40, a double convex lens 42, a collimating mirror 44, a holographic recording plate 46 and support means 48 in order to mount an object 50. As will be noted both the signal path and the reference path pass through the double convex lens 42. The reference beam on passing through the lens 42 is reflected by the collimating mirror 44 and directed onto the holographic recording plate 46. The signal path illuminates the object 50 and by interference with the reference beam forms a three dimensional holographic image of the object 50 on the holographic plate 46.

The laser 40 is preferably a Krypton laser which generates a coherent radiation at a wavelength of 647 nm.

Provided that the respective reference and signal path lengths meet the requirements of the above expression, then there is no degradation of the holographic image formed on the plate 46, i.e. it is sharp and does not exhibit fuzzy edges.

The recording emulsion used on the plate 46 must exhibit minimum levels of scatter. Recent advances in recording medium technology make either diochromated gelatin or hydrophobic polymeric compounds a suitable medium on which to record the holographic image.

Furthermore by using only one lens which is common to both reference and signal paths and only one mirror, the whole system is far less affected by vibration than the system shown in Figure 1, which uses separate lenses and mirrors in each path. Accordingly, with the arrangement shown in Figure 2, it is possible to achieve a better holographic image of the object with far fewer components thus reducing the cost thereof.

Furthermore, a better holographic image will result in a more accurate check in the detection of flaws and minute deviations in the shape of like objects when used for the positional detection thereof in accordance with the method disclosed in British Patent Specification No. 2,194,353.

## Claims

1. Apparatus for the positional detection of objects in which a holographic image of the sample object is recorded on a photographic plate, wherein the reference and signal beams are not split, and reflecting means for the reference beam and a holder to locate the object are positioned such that the relationship: $|L_1-L_2|<L_c$ is satisfied, where $L_1$ and $L_2$ are respectively the lengths of the reference and signal paths and $L_c$ is the path difference over which interference can still take place.

2. Apparatus according to claim 1, wherein the reference and signal beams both pass through a double convex lens before being directed to respectively the reflecting means and the holder.

3. Apparatus according to claim 1 or 2, wherein said reference and signal beams are generated by a Krypton laser.

4. Apparatus according to claim 3, wherein said Krypton laser generates a coherent radiation at a wavelength of 647 nm.

5. Apparatus according to any one of the preceding claims, wherein said reflecting means is a collimating mirror.

6. Apparatus for the positional detection of objects in which a holographic image of a sample object is recorded on a photographic plate, constructed substantially as herein described with reference to and as illustrated in Figure 2 of the accompanying drawings.

BEAM SPLITTER

22

PATH 1 (90%)

MIRROR

LASER

20

24

PATH 2 (10%)

PLATE

30

LENS

25

LENS

26

REFERENCE LIGHT

10

GROUP OF THREE TEST WIRES (PLAN VIEW)

28

12

MIRROR (COLLIMATING)

14

FIG. 1

0 278 714

_FIG. 2._

0 278 714